# FASCICULE DE BREVET EUROPEEN

(11) **EP 1 238 876 B1**
(45) Date de publication et mention de la délivrance du brevet: **07.01.2009**
(21) Numéro de dépôt: 02290511.1
(22) Date de dépôt: 01.03.2002
(51) Int. Cl.: B60T 7/12, B60K 31/00

(54) **Procédé de freinage assisté d'un véhicule automobile**
Bremsunterstützungsverfahren eines Kraftfahrzeuges
Power assisted braking method for a motor vehicle

(30) Priorité: 06.03.2001 FR 0103034
(43) Date de publication de la demande: 11.09.2002
(73) Titulaire: RENAULT S.A.S., 92100 Boulogne Billancourt (FR)
(72) Inventeur: Chabanon, Christian, 27700 Tosny (FR); Thumerel, François, 78000 Versailles (FR); Priez, Alain, 91190 Gif/Yvette (FR)

(56) Documents cités:
- EP-A- 0 867 349
- DE-A- 19 647 430
- FR-A- 2 769 884

## Description

La présente invention concerne un procédé de freinage assisté d'un véhicule automobile, équipé d'un système de régulation automatique de distance et de vitesse dont la désactivation est provoquée par l'enfoncement de la pédale de frein.

Les systèmes actuels de régulation de distance ACC - Adaptative Cruise Control - permettent de maintenir automatiquement une distance de sécurité avec un véhicule cible détecté, circulant devant et dans la même direction que le véhicule régulé. Cette détection est faite par des moyens de type radar ou lidar par exemple, situés à l'avant du véhicule et qui calculent la position et la vitesse relatives du ou des véhicules précédents. Ces informations sont envoyées au calculateur électronique de contrôle moteur; à la boîte de vitesse et au système de freinage pour piloter l'accélération du véhicule. Au-dessus d'une vitesse minimale, de l'ordre de 40 km/h, le conducteur du véhicule régulé peut sélectionner une vitesse de croisière à laquelle va se stabiliser le véhicule, cette sélection pouvant se faire par l'intermédiaire de boutons situés sur le volant par exemple. Si un véhicule plus lent est détecté sur la voie, le système de régulation ACC module alors automatiquement la vitesse pour adapter la distance par rapport à cette cible.

Une interface dédiée permet de renseigner le conducteur à tout instant sur l'état du système. La demande de brevet français No. 95 04155, déposée au nom de RENAULT, décrit un procédé et un dispositif de régulation de l'accélération longitudinale d'un véhicule et la demande de brevet FR 2 769 884 décrit un système de freinage pour un véhicule automobile comportant un mode de freinage assisté conventionnel.

Cependant, dans les phases d'approche avec une vitesse relative importante, le système de régulation ACC atteint rapidement la décélération maximale autorisée, soit + 3 m/s². Dans ce cas, il avertit par alarme sonore ou visuelle le conducteur, pour que celui-ci reprenne lui-même le contrôle du freinage de son véhicule. A ce moment là, le conducteur a quelques difficultés pour trouver l'endroit où se situe la pédale de frein et à doser correctement son freinage, ne connaissant pas exactement la position de cette pédale déplacée par le « booster » actif piloté par le système de régulation. En effet, les systèmes avec un mode de freinage automatique ou assisté induisent une variation de l'altitude de la pédale proportionnelle à la consigne de freinage. A ce premier inconvénient s'ajoute la conséquence de la désactivation de la régulation ACC par l'enfoncement de la pédale de frein : le conducteur récupère, lors du passage de la régulation de distance au contrôle direct du freinage, un effort pédale important, supérieur à celui de l'attaque d'un freinage de même intensité, car la pédale est située plus bas et la jambe du conducteur plus dépliée ce qui décuple l'effort musculaire. Ces deux inconvénients contribuent à un mauvais ajustement du dosage du freinage nécessaire dans la situation routière rencontrée.

De plus, certains conducteurs ne parviennent pas à déclencher le système d'aide au freinage d'urgence car la vitesse avec laquelle ils enfoncent la pédale de frein est inférieure au seuil de vitesse programmé.

L'invention a pour but de pallier ces différents inconvénients en proposant un procédé de freinage assisté d'un véhicule automobile, équipé d'un système de régulation automatique de distance et de vitesse, comprenant des moyens de détection de cibles et un calculateur de contrôle du système de freinage, caractérisé en ce que le système de régulation automatique étant désactivé ou suspendu par actionnement du système de freinage de la part du conducteur, il comporte une phase de freinage assisté au cours de laquelle la décélération du véhicule est pilotée par le calculateur, suivant une consigne déterminée en temps réel en fonction de la distance et de la vitesse relatives du véhicule cible détecté, cette phase étant maintenue tant que le conducteur freine et qu'il y a un obstacle détecté devant le véhicule.

D'autres caractéristiques et avantages de l'invention apparaîtront à la lecture de la description qui suit, illustrée par les figures ci-après qui sont :
- figure 1 : un schéma fonctionnel d'un système régulateur de distance et de vitesse d'un véhicule automobile ;
- figures 2 et 3 : les organigrammes des différentes étapes constituant deux variantes du procédé de freinage assisté selon l'invention, dans le cas d'une désactivation du système de régulation de distance et de vitesse, par enfoncement de la pédale de frein ;
- figures 4 et 5 : les organigrammes des différentes étapes constituant deux variantes du procédé de freinage assisté selon l'invention, dans le cas d'une suspension momentanée du système de régulation de distance et de vitesse, par enfoncement de la pédale de frein.

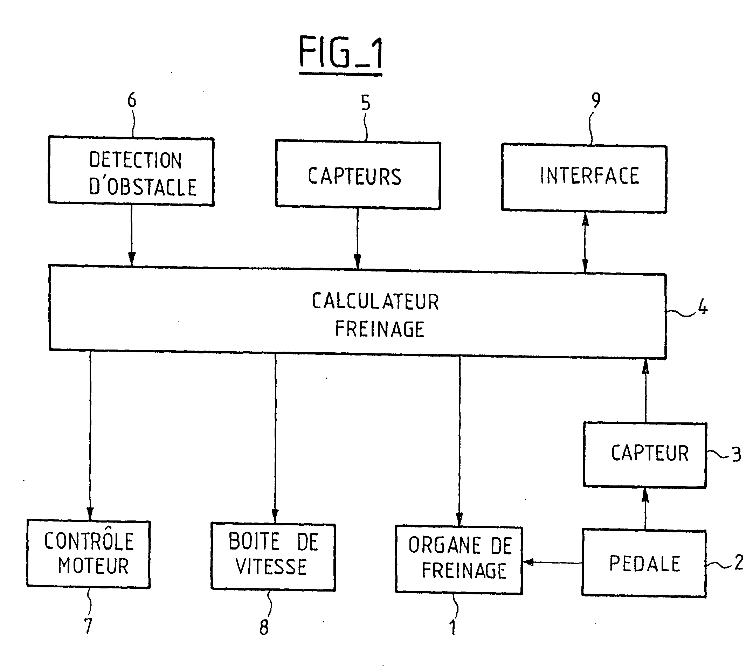

Comme le montre le schéma fonctionnel de la figure 1, le système de freinage d'un véhicule automobile comprend classiquement un organe de freinage 1 destiné à provoquer une décélération du véhicule lorsque le conducteur appuie sur la pédale de frein 2, qui peut être remplacée dans certains cas par un levier, un bouton rotatif ou tout autre moyen de commande. L'organe de freinage est constitué de freins, d'un circuit d'actionnement de ces freins, hydraulique ou électrique, et dans le cas d'un système d'anti-blocage des roues ABS, d'un calculateur électronique. Dans les systèmes à freinage automatique d'urgence, un capteur 3 de position de la pédale de frein délivre une information sur l'enfoncement de cette pédale par le conducteur, ainsi qu'une information sur sa vitesse d'enfoncement.

Le système comprend de plus un calculateur 4 de commande de l'organe de freinage 1, dans certains cas de décélération importante à obtenir lors de situations d'urgence par exemple. Ce calculateur 4, qui reçoit des informations dynamiques sur le véhicule, comme sa vitesse instantanée, de la part de capteurs 5, est associé à un détecteur d'obstacles 6, de type radar, lidar, télémétrie laser par exemple. Ce détecteur d'obstacles signale la présence d'au moins une cible circulant devant le véhicule, dans la même direction et donne sa distance ainsi que sa vitesse relatives. Les informations sont envoyées au calculateur de contrôle moteur 7, à la boîte de vitesses 8 et servent à piloter l'organe de freinage 1. Une interface 9 homme-machine comporte des moyens d'activation d'un système de régulation automatique de distance et de vitesse et renseigne le conducteur sur l'état instantané du système, par signal sonore ou visuel.

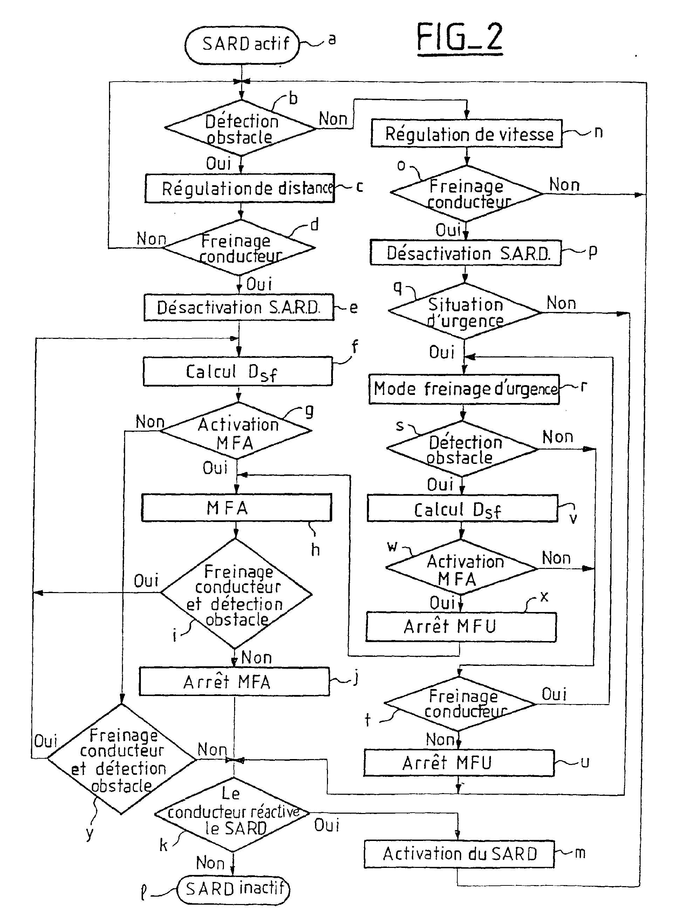

L'objet de l'invention est un procédé de freinage assisté mis en oeuvre par un tel système. L'organigramme de la figure 2 décrit les différentes étapes d'un procédé de freinage d'un véhicule équipé d'un système de régulation de distance et de vitesse, qui est désactivé par l'enfoncement de la pédale de frein de la part du conducteur.

L'étape a correspond à un Système Automatique de Régulation de Distance SARD qui a été activé par le conducteur, par l'intermédiaire de la commande classique des régulateurs de distance. Si un véhicule cible a été détecté à l'étape b, le système assure bien les fonctionnalités d'une régulation de distance, avec notamment le contrôle de l'accélération à appliquer au véhicule pour adapter la vitesse du véhicule à la vitesse relative de l'obstacle à détecter et à la distance qui les sépare - étape c -. Sinon, le système réalise une régulation de vitesse - étape n - sans détection d'obstacle devant le véhicule.

Dans le cas d'une régulation de distance, grâce à des capteurs d'appui sur le frein, placés sur la pédale de frein, comme par exemple des interrupteurs, des capteurs ultra-sons ou un capteur d'effort, le calculateur du système de freinage vérifie à l'étape d si le conducteur a l'intention de freiner en appuyant sur la pédale. Si cette dernière n'est pas enfoncée, le procédé retourne à l'étape b de détection d'obstacle, par contre si elle est enfoncée par le pied du conducteur, le Système Automatique de Régulation de Distance est désactivé à l'étape e : il n'agit plus ni sur les freins ni sur le moteur.

Le calculateur procède alors au calcul, à l'étape f, de la décélération minimale suffisante D_{sf} à imposer au véhicule pour l'arrêter derrière la cible détectée en limitant les risques de collision. Cette valeur instantanée de décélération est déterminée à partir des distance et vitesse relatives entre le véhicule et la cible, de la vitesse instantanée du véhicule, ainsi que de la trajectoire ou de l'adhérence de ce dernier dans certains cas. De plus, le calculateur évalue la décélération D_{c} commandée par le conducteur et calcule deux seuils de décélération D₀ et D₁. Le premier seuil D₀ est fixe ou variable en fonction par exemple du style de conduite du conducteur analysé à partir des freinages précédents, des déclenchements précédents du mode de freinage assisté et des conditions d'adhérence de la chaussée. Le second seuil D₁ est fonction de la limite du freinage confortable, et dépend de la vitesse du véhicule régulé et du style de freinage, ainsi que des conditions d'adhérence de la chaussée.

L'étape g est celle de l'activation du mode de freinage assisté MFA suivant deux stratégies. Selon la première stratégie, la décélération D_{sf} suffisante calculée auparavant doit être supérieure au seuil D₀, fixe ou variable. De plus, la volonté du conducteur de freiner réellement doit être détectée, notamment en mesurant la course de la pédale de frein enfoncée par le pied du conducteur, grâce au capteur de position pédale. La décélération D_{c} commandée par le conducteur, et qui correspond à la course mesurée de la pédale de frein, doit être inférieure à la décélération suffisante D_{sf} calculée. Sinon, le conducteur contrôle lui-même le freinage de son véhicule. Selon la deuxième stratégie, la décélération suffisante D_{sf} est supérieure à la décélération D_{c} commandée par le conducteur et cette dernière est de plus supérieure au second seuil de décélération D₁. Pour un même niveau de seuil de décélération, la première stratégie active le mode de freinage assisté plus tôt que la seconde stratégie, car la décélération commandée par le conducteur n'est pas obligatoirement supérieure au seuil de décélération. La seconde stratégie laisse plus de manoeuvre et de responsabilité au conducteur dans les freinages confortables. Le point commun de ces deux stratégies est la détermination de l'insuffisance du freinage du conducteur, c'est-à-dire que D_{c} est inférieure à D_{sf}.

Pendant la phase h de freinage assisté, le calculateur du système de freinage commande la décélération du véhicule pour qu'elle soit égale à la valeur suffisante D_{sf} calculée, valeur de consigne qui est mise à jour dynamiquement pour tenir compte de la détection d'un nouveau véhicule cible par exemple dans le champ du radar et envoyée au système pilotant les freins.

Pour maintenir cette assistance au freinage, il faut à la fois que le conducteur appuie toujours sur la pédale de frein pour démontrer son intention de freiner et que les moyens de détection aperçoivent un obstacle, ces deux conditions étant à vérifier à l'étape i par le calculateur.

S'il n'y a plus présence d'un véhicule cible devant le véhicule assisté ou si le conducteur ne freine plus, le mode de freinage assisté est arrêté et la consigne de décélération est annulée immédiatement - étape j -, et le conducteur peut volontairement réactiver le Système Automatique de Régulation SARD - étape k -, à condition que les limites de fonctionnement du SARD soient respectées, sinon celui-ci reste inactif - étape I -. Dans le cas d'une activation du système SARD - étape m -, le système automatique de régulation redémarre à l'étape b.

Lorsque les conditions de mise en activation du mode de freinage assisté ne sont pas remplies à l'étape g, le calculateur regarde si un obstacle est toujours détecté et si le conducteur continue à freiner - étape y - car les conditions de circulation peuvent changer. Si tel n'est pas le cas, ce procédé aboutit à une étape k de possibilité de réactivation du système SARD par le conducteur. Mais si tel est le cas, le procédé retourne à l'étape f de calcul de la décélération suffisante D_{sf}.

La partie droite de l'organigramme de la figure 2 décrit les différentes étapes du procédé de freinage selon l'invention dans le cas d'une régulation de vitesse activée au départ, sans détection d'obstacle devant le véhicule régulé.

Le véhicule étant régulé en vitesse selon la consigne de vitesse souhaitée par le conducteur - étape n -, le calculateur vérifie si le conducteur appuie sur la pédale de frein à l'étape o, grâce aux capteurs d'appui sur le frein. Tant que le conducteur ne freine pas, le système automatique de régulation continue, mais s'il freine, il est alors désactivé à l'étape p.

A l'étape suivante q, le calculateur détermine si la situation actuelle a été détectée par le conducteur comme une situation d'urgence, notamment en lisant l'information de vitesse d'enfoncement de la pédale de frein délivrée par le capteur de position.

Si cette vitesse d'enfoncement est inférieure à un seuil prédéfini, le calculateur en déduit que le conducteur assure lui-même le freinage et aucun mode de freinage d'urgence n'est déclenché, le conducteur pouvant réactiver le système SARD à l'étape k s'il le souhaite.

Par contre, si la vitesse d'enfoncement est supérieure au seuil, il y a détection d'une situation d'urgence et une phase r de freinage d'urgence est activée.

Au cours de ce mode de freinage automatique d'urgence, le calculateur de freinage commande la décélération maximale permise par l'organe de freinage du véhicule selon les conditions d'adhérence du véhicule sur la route.

A l'étape s suivante, le calculateur reçoit des informations de la part du détecteur d'obstacle. Si aucune cible n'est détectée circulant devant le véhicule régulé, ce freinage d'urgence est maintenu tant que le conducteur continue à freiner, ce qui est vérifié à l'étape t par analyse de l'enfoncement de la pédale de frein. Par contre, si le conducteur cesse d'appuyer sur cette pédale, le mode de freinage d'urgence est arrêté à l'étape u, la consigne de décélération maximale est annulée et le conducteur a la possibilité de réactiver le système SARD à l'étape k.

Dans le cas où une cible est effectivement détectée à l'étape s précédente, le calculateur détermine la valeur de la décélération suffisante D_{sf} pour arrêter le véhicule derrière sa cible sans collision, à l'étape v, ainsi que le seuil de décélération D₀ déjà mentionné, puis vérifie les conditions d'activation du mode de freinage assisté MFA à l'étape w. Pour cela, la décélération suffisante D_{sf} déterminée doit être supérieure au seuil de décélération D₀. Elle n'est pas comparée à la décélération D_{c} commandée par le conducteur car le mode de freinage d'urgence commande la décélération maximale disponible sur le véhicule, selon les conditions d'adhérence de la chaussée.

Si le mode de freinage assisté ne peut pas être activé, le calculateur maintient le freinage d'urgence tant que le conducteur continue à freiner, étape t précédente. A l'arrêt du freinage par le conducteur, le mode de freinage d'urgence MFU est stoppé à l'étape u.

Par contre, si les conditions sont remplies pour que le freinage assisté soit activé à l'étape w, le procédé arrête le mode de freinage d'urgence à l'étape x, et reprend les étapes du mode de freinage assisté précédemment décrites, à partir de son activation à l'étape h jusqu'à son arrêt à l'étape j . La consigne de décélération maximale est remplacée à l'étape h par la décélération suffisante envoyée comme consigne au système pilotant les freins du véhicule équipé. Une continuité entre les deux consignes est opérée pour offrir une pédale de frein confortable et une sensation continue de décélération au conducteur.

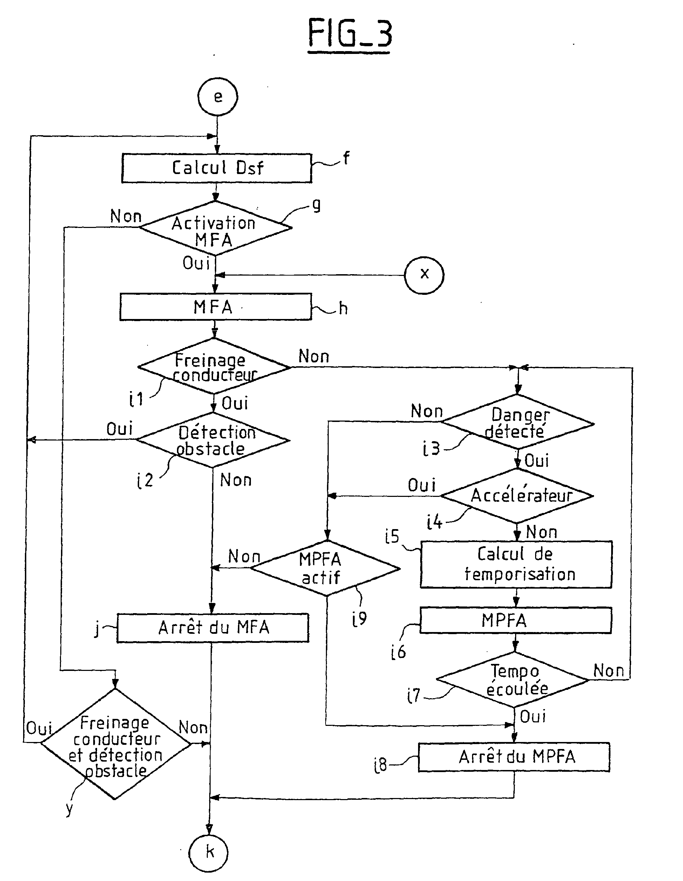

Une variante de ce procédé de freinage assisté selon l'invention est représentée sur la figure 3, qui est un organigramme partiel d'un procédé de régulation de distance et de vitesse d'un véhicule. Cette variante concerne un mode de maintien programmé du freinage assisté quand le conducteur n'agit ni sur la pédale de freins ni sur l'accélérateur.

Si pendant le mode de freinage assisté, le calculateur reçoit l'information selon laquelle le conducteur n'a plus l'intention de freiner puisqu'il a ôté son pied de la pédale de frein - étape i1 -, le calculateur estime à l'étape i3 la présence ou non d'un danger de collision, par exemple selon un critère de décélération supérieure à un seuil.

Si un danger est détecté, le calculateur vérifie la position de la pédale d'accélérateur - étape i4 -. Si le conducteur l'enfonce, c'est pour accélérer, changer de voie ou entamer un dépassement de l'obstacle. Sinon, le conducteur n'appuie sur aucune pédale et l'obstacle détecté présente toujours un danger. Alors, le calculateur va programmer le maintien du freinage assisté pendant une durée fixe ou variable en fonction de ce danger, de la vitesse instantanée et de la décélération du véhicule.

Une temporisation est alors calculée à l'étape i5. Cette temporisation est la somme de deux durées, la première pour assurer une décélération constante et la deuxième pour réduire progressivement la consigne de décélération jusqu'à une valeur nulle. La détermination de ces durées est fonction du danger détecté et de la vitesse du véhicule équipé. Si le danger entraîne un risque très faible de collision, ces deux durées peuvent être nulles. De plus, la somme de ces deux durées ne peut excéder une durée limitée, car le conducteur doit ressentir une diminution du freinage surtout s'il a l'intention d'accélérer ultérieurement pour préparer un dépassement ou un changement de voie.

Puis la phase i6 de Maintien Programmé du Freinage Assisté MPFA démarre et la consigne de décélération calculée en fonction de la temporisation et du danger détecté est appliquée au système pilotant les freins.

Par contre, si à l'étape i1, le conducteur appuie encore sur la pédale de frein, le procédé passe à l'étape i2 de vérification qu'un obstacle est détecté sur la trajectoire du véhicule. Si un obstacle est détecté, le procédé retourne à l'étape f, sinon le mode de freinage assisté est arrêté à l'étape j.

Ce mode de maintien programmé du freinage assisté assure une réduction de la vitesse relative derrière un obstacle détecté sur la trajectoire du véhicule, de façon à diminuer, voire annuler, tout risque de collision. Il se poursuit jusqu'à ce que la temporisation mesurée à l'étape i7 arrive à sa fin, auquel cas le mode de maintien programmé du freinage est arrêté à l'étape i8 et le conducteur pourra réactiver volontairement le système SARD à l'étape k.

A la fin du maintien, la consigne de décélération est annulée soit immédiatement, soit de manière progressive en fonction du temps, du danger détecté et/ou de la vitesse du véhicule.

Si pendant la temporisation, le calculateur constate qu'il n'y a plus de danger détecté ou que le conducteur accélère après avoir relâché la pédale de frein, et que le mode de maintien programmé est toujours actif, à l'étape i9, ce dernier est arrêté à l'étape i8, sinon le procédé arrête le mode de freinage assisté à l'étape j.

Ce procédé selon l'invention assiste le conducteur dans son freinage alors que le système automatique de régulation de distance et de vitesse est désactivé. Ainsi, il récupère la pédale de frein au bon enfoncement pour une assistance à la décélération qui permet d'éviter la collision avec la cible détectée, puisqu'il y a continuité du contrôle en distance. La réaction du système de freinage est adaptée à la situation et est notamment plus rapide que celle du conducteur, qui n'apprécie pas toujours correctement les distances. Ce procédé apporte un agrément certain dans la progressivité de la transition du freinage et dans le confort du freinage appuyé.

De plus, dans les cas de freinages urgents où le relâchement de la pédale de frein par le conducteur peut provoquer un risque de collision imminent, le maintien du freinage assisté diminue la distance d'arrêt et limite le différentiel de vitesse lors d'une collision. Cependant, le conducteur peut toujours reprendre la main sur le système de freinage automatique et réaccélérer pour faire une manoeuvre particulière, tel qu'un évitement.

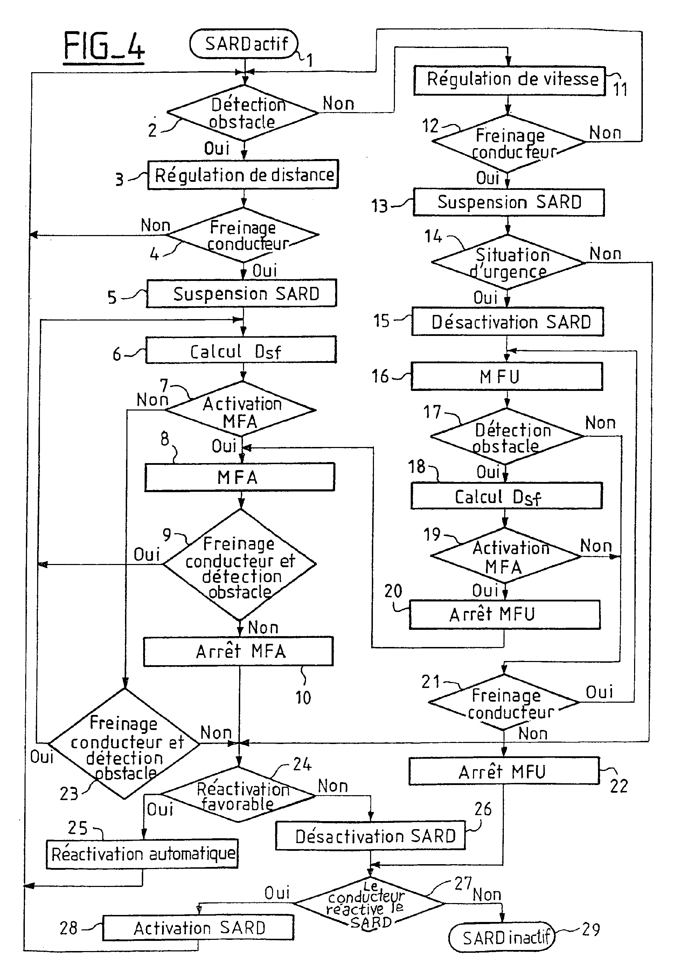

L'organigramme de la figure 4 décrit les différentes étapes d'un procédé de freinage d'un véhicule dont le système de régulation de distance et de vitesse n'est pas désactivé définitivement par appui sur la pédale de frein mais seulement suspendu temporairement, avec réactivation automatique si les conditions de régulation de distance sont redevenues normales. Les conditions concernent le caractère plus ou moins critique du freinage rencontré vis-à-vis de l'état du trafic routier, ainsi que l'habileté du conducteur. Par exemple, sur un freinage rapide, le système automatique de régulation de distance ne sera pas désactivé mais seulement suspendu, si le conducteur a un style de conduite dynamique et si le trafic est fluide, avec peu de véhicules dans la direction du véhicule régulé et/ou plusieurs voies de circulation vides. Par contre, si le freinage correspond à une situation d'urgence, le système automatique n'est pas réactivé.

Lorsque le véhicule est en régulation de distance, les étapes 1 à 10 et 23 du procédé de freinage selon l'invention sont identiques aux étapes a à j et y du procédé décrit dans la figure 2, excepté l'étape 5 qui, dans ce cas, est une suspension momentanée du Système Automatique de Régulation de Distance SARD. Le conducteur a le pied sur la pédale de frein, le système SARD est simplement suspendu car les consignes de décélération du système SARD vont être dépassées par la décélération commandée par le freinage du conducteur.

Lorsque le véhicule est en régulation de vitesse, sans obstacle détecté - étape 11 -, le calculateur vérifie si le conducteur freine - étape 12 -. Si le conducteur a le pied sur le frein, le système SARD est simplement suspendu à l'étape 13, ce qui diffère de l'étape p de la figure 2. Les consignes de décélération du système SARD vont être dépassées par la décélération commandée par le conducteur.

A l'étape 14 suivante, il y a recherche d'une situation d'urgence selon les actions du conducteur. Dans le cas d'une détection d'une situation d'urgence, le système SARD est automatiquement désactivé, car il est considéré dangereux d'autoriser une réactivation automatique du SARD après une situation d'urgence. Le système SARD n'agit ni sur les freins et ni sur le moteur.

Les étapes suivantes 16 à 22 sont identiques aux étapes r à x de l'organigramme de la figure 2.

A l'étape 24, les modes de freinage assisté MFA et de freinage d'urgence MFU sont inactifs, le système SARD est soit suspendu temporairement, soit désactivé définitivement. Dans le cas où il est suspendu, le calculateur vérifie d'une part si les conditions de régulation par le système SARD sont toujours respectées concernant la vitesse minimale du véhicule et sa décélération qui doit être inférieure à la limite de décélération automatique de + 3 m/s² par exemple, et d'autre part si la réactivation est favorable en fonction des conditions de circulation et du style de conduite du conducteur.

Si ces conditions sont toutes réunies, le système SARD est automatiquement réactivé à l'étape 25, sans action du conducteur après avoir relâché la pédale de frein. Le système SARD envoie à nouveau ses consignes d'accélération et de décélération du véhicule.

Par contre, si les conditions ne sont pas respectées, la réactivation automatique n'est pas sécuritaire et le système SARD est désactivé à l'étape 26, pour qu'il n'agisse plus sur les freins et le moteur.

Les étapes 27 à 29 suivantes de réactivation éventuelle par le conducteur sont identiques aux étapes k à m du procédé décrit à la figure 2.

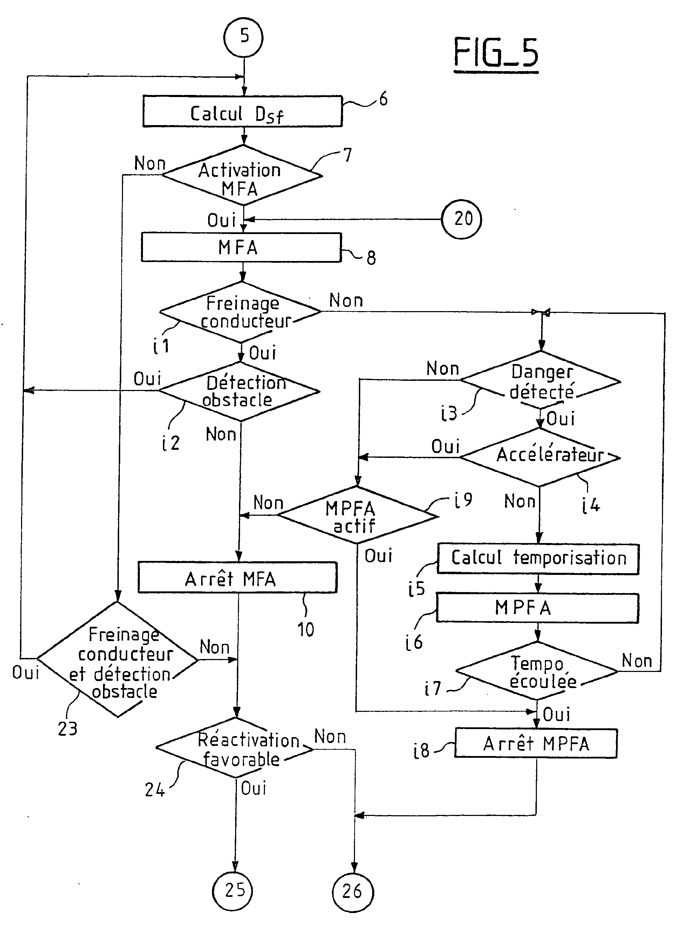

La figure 5 se rapporte à une variante du procédé de freinage assisté selon l'invention, dans le cas d'une suspension provisoire du système SARD comme précédemment décrite, variante se rapportant à un mode de maintien programmé du freinage assisté lorsque le conducteur n'agit ni sur les freins, ni sur l'accélérateur. Cette variante comporte les mêmes étapes i1 à i9 que celles décrites dans la variante de la figure 3.

Si pendant le mode de freinage assisté, activé à l'étape 8, le calculateur constate que le conducteur ne freine plus - étape i1 -, mais n'accélère pas cependant - étape i4 -, alors qu'un danger est détecté - étape i3 -, un mode de Maintien Programmé de Freinage Assisté est activé - étape i6 - pendant une temporisation.

Selon une autre caractéristique du procédé de freinage assisté selon l'invention, il limite l'évolution de la consigne de décélération en fonction du style de freinage du conducteur, analysé avant le déclenchement du freinage assisté. L'évolution du gradient de décélération du véhicule est calculée en fonction de trois valeurs de cette grandeur avant le déclenchement du freinage assisté, telles que la valeur moyenne, la valeur maximale et la dernière valeur avant l'activation du freinage assisté. Ces trois valeurs sont mémorisées et servent à paramétrer l'évolution de la consigne de décélération en fonction du danger détecté et de la vitesse du véhicule. L'avantage de cette limitation de l'évolution de la consigne de décélération apporte confort et souplesse dans le déclenchement du freinage assisté, qui sinon est si brusque qu'il perturbe le conducteur lors d'un risque de collision élevé, au point qu'il risque de relâcher son effort partiellement ou complètement et de ne pas suivre le mouvement de la pédale de frein déplacée par le booster actif proportionnel. La limitation de l'évolution de la consigne de décélération, lors du mode de freinage assisté, empêche également une activation intempestive et non souhaitée du mode de freinage d'urgence, dans le cas où les deux modes sont gérés par deux calculateurs différents ou de manière indépendante. En effet, le déplacement de la pédale est limité en vitesse pour ne pas déclencher le mode de freinage d'urgence.

## Revendications

1. Procédé de freinage assisté d'un véhicule automobile, équipé d'un système de régulation automatique de distance et de vitesse, comprenant des moyens de détection de cibles et un calculateur de contrôle du système de freinage, **caractérisé en ce que** le système de régulation automatique étant désactivé ou suspendu par actionnement du système de freinage de la part du conducteur, il comporte une phase de freinage assisté au cours de laquelle la décélération du véhicule est pilotée par le calculateur, suivant une consigne déterminée en temps réel en fonction de la distance et de la vitesse relatives du véhicule cible détecté, cette phase étant maintenue tant que le conducteur freine et qu'il y a un obstacle détecté devant le véhicule.

2. Procédé de freinage assisté selon la revendication 1, **caractérisé en ce que**, pendant la phase en mode de freinage assisté alors que le conducteur maintient son freinage volontaire par appui sur la pédale de frein, si les moyens de détection d'obstacle délivrent une information d'absence de cible devant le véhicule régulé, alors ce mode de freinage assisté est arrêté.

3. Procédé de freinage assisté selon la revendication 1, **caractérisé en ce que**, pendant la phase en mode de freinage assisté, si d'une part le conducteur cesse de freiner et n'accélère pas, et si d'autre part une situation de danger est détectée, le calculateur du système de contrôle du freinage décide d'un mode de maintien programmé du freinage assisté pendant une temporisation déterminée, ledit mode de maintien programmé du freinage assisté étant arrêté et la consigne de décélération du véhicule étant annulée quand la temporisation est écoulée ou quand le conducteur accélère.

4. Procédé de freinage assisté selon la revendication 1, **caractérisé en ce que**, pendant la phase en mode de freinage assisté, si le conducteur cesse de freiner et qu'il y a absence constatée de danger, le mode de freinage assisté est arrêté.

5. Procédé de freinage assisté selon l'une des revendications précédentes, **caractérisé en ce que**, dans le cas d'une régulation automatique de distance avec un véhicule cible détecté, désactivée ou suspendue par le freinage volontaire du conducteur, il comporte les étapes suivantes :
- (f, 6) calcul de la décélération minimale suffisante (D_{sf}) à imposer comme consigne au véhicule pour assurer son arrêt derrière la cible détectée ;
- (g, 7) activation du mode de freinage assisté, à condition que la décélération minimale suffisante (D_{sf}) calculée soit supérieure à la décélération (D_{c}) commandée par le conducteur ;
- (h, 8) commande de la décélération du véhicule à la valeur de consigne (D_{sf}) instantanée, par pilotage du système de freins ;
- (i, 9) vérification du freinage du conducteur et de la présence d'un obstacle devant le véhicule ;
- (j, 10) arrêt du mode de freinage assisté et annulation de la consigne de décélération si le conducteur ne freine plus ou si aucun obstacle n'est détecté devant le véhicule.

6. Procédé de freinage assisté selon l'une quelconque des revendications 1 à 4, **caractérisé en ce que**, dans le cas d'une régulation automatique de vitesse, désactivée ou suspendue par le freinage volontaire du conducteur déclenchant un mode de freinage d'urgence au cours duquel un obstacle est détecté devant le véhicule régulé, il comporte les étapes suivantes :
- (v, 18) calcul de la décélération minimale suffisante (D_{sf}) à imposer comme consigne au véhicule pour assurer son arrêt derrière la cible détectée ;
- (w, 19) activation du mode de freinage assisté par comparaison de ladite décélération minimale suffisante (D_{sf}) avec un seuil (Dₒ) déterminé ;
- (x, 20) arrêt du mode de freinage d'urgence si la décélération suffisante (D_{sf}) est supérieure au seuil (Dₒ) ;
- (h, 8) commande de la décélération du véhicule à la valeur de consigne (D_{sf}) instantanée, par pilotage du système de freins ;
- (i, 9) vérification du freinage du conducteur et de la présence d'un obstacle devant le véhicule ;
- (j, 10) arrêt du mode de freinage assisté et annulation de la consigne de décélération si le conducteur ne freine plus ou si aucun obstacle n'est détecté devant le véhicule.

7. Procédé de freinage assisté selon l'une des revendications 5 ou 6, **caractérisé en ce que**, à l'arrêt décidé du mode de freinage assisté (étape j, 10), la consigne de décélération est annulée de manière progressive en fonction du temps, du danger détecté et de la vitesse du véhicule.

8. Procédé de freinage assisté selon l'une des revendications 5, 6 ou 7, **caractérisé en ce que**, après l'arrêt du mode de freinage assisté mis en route après désactivation du système automatique de régulation de distance par freinage du conducteur, ledit système automatique est réactivé par action volontaire du conducteur (étape k).

9. Procédé de freinage assisté selon l'une des revendications 5, 6 ou 7, **caractérisé en ce que**, après l'arrêt du mode de freinage assisté mis en route après suspension du système automatique de régulation de distance par freinage du conducteur :
- si les conditions de régulation de distance par le système SARD, concernant la vitesse du véhicule, sa décélération maximale, la fluidité du trafic et le style de conduite notamment, sont remplies, ledit système SARD est réactivé automatiquement (étape 25) ;
- si lesdites conditions de régulation ne sont pas remplies, le système SARD est désactivé (étape 26) et pourra être réactivé par action volontaire du conducteur (étape 28).

10. Procédé de freinage assisté selon la revendication 5, **caractérisé en ce que** l'activation du mode de freinage assisté est déclenchée à condition que la décélération minimale suffisante (D_{sf}) calculée soit de plus supérieure à un premier seuil (D₀) de décélération déterminé et qu'elle soit supérieure à la décélération (D_{c}) commandée par le conducteur.

11. Procédé de freinage assisté selon la revendication 5, **caractérisé en ce que** l'activation du mode de freinage assisté est déclenchée à condition que la décélération minimale suffisante (D_{sf}) calculée soit supérieure à la décélération commandée (D_{c}) par le conducteur, qui doit être elle-même supérieure à un second seuil (D₁) de décélération déterminé en fonction de la limite du freinage confortable, de la vitesse du véhicule régulé et du style de conduite de son conducteur ainsi que des conditions d'adhérence de la chaussée.

12. Procédé de freinage assisté selon la revendication 3, **caractérisé en ce que** la temporisation, pendant laquelle est exécuté le mode de maintien programmé du freinage assisté, est variable en fonction du danger détecté, de la vitesse et de la décélération instantanées du véhicule.

13. Procédé de freinage assisté selon l'une des revendications précédentes, **caractérisé en ce que** l'évolution du gradient de décélération du véhicule est calculée en fonction de la valeur moyenne et de la valeur maximale de la décélération d'une part et de la dernière valeur de la décélération mesurée avant l'activation du freinage assisté d'autre part.

14. Procédé de freinage assisté selon l'une des revendications 6, 10 ou 11, **caractérisé en ce que** le seuil (Dₒ) minimal de la décélération du véhicule est variable en fonction du style de conduite du conducteur analysé à partir des déclenchements précédents du mode de freinage assisté.

## Claims

1. Assisted braking method for a motor vehicle, fitted with an automatic distance and speed control system, comprising means of detection of targets and an ECU for controlling the braking system, **characterized in that** the automatic control system being deactivated or suspended by operation of the braking system on the part of the driver, the method includes an assisted braking phase during which the vehicle deceleration is managed by the ECU, based on a setting determined in real time according to the relative distance and speed of the target vehicle detected, this phase being maintained as long as the driver is braking and there is an obstacle detected in front of the vehicle.

2. Assisted braking method according to Claim 1, **characterized in that**, during the assisted braking mode phase while the driver maintains his deliberate braking by pressure on the brake pedal, if the obstacle detection means sends a no target in front of the controlled vehicle signal, then this assisted braking mode is stopped.

3. Assisted braking method according to Claim 1, **characterized in that**, during the assisted braking mode phase, if on the one hand the driver ceases to brake and does not accelerate, and if on the other hand a dangerous situation is detected, the ECU of the braking control system selects a programmed hold mode of the assisted braking for a specified time period, the said programmed hold mode of the assisted braking being stopped and the vehicle deceleration setting being cancelled when the time period has elapsed or when the driver accelerates.

4. Assisted braking method according to Claim 1, **characterized in that**, during the assisted braking mode phase, if the driver ceases to brake and no danger is observed, the assisted braking mode is stopped.

5. Assisted braking method according to one of the preceding claims, **characterized in that**, if there is an automatic distance control with a target vehicle detected, which is deactivated or suspended by the driver's deliberate braking, the method includes the following steps:
- (f, 6) calculation of the minimum sufficient deceleration (D_{sf}) required as setting for the vehicle to ensure it stops behind the target detected;
- (g, 7) activation of the assisted braking mode, provided that the calculated minimum sufficient deceleration (D_{sf}) is higher than the deceleration (D_{c}) activated by the driver;
- (h, 8) activation of the vehicle deceleration at the actual required value (D_{sf}) , by management of the brake system;
- (i, 9) verification of the driver's braking and the presence of an obstacle in front of the vehicle;
- (j, 10) stopping of the assisted braking mode and cancellation of the deceleration setting if the driver is no longer braking or if no obstacle is detected in front of the vehicle.

6. Assisted braking method according to any one of Claims 1 to 4, **characterized in that**, if there is an automatic speed control, which is deactivated or suspended by the driver's deliberate braking triggering an emergency braking mode during which an obstacle is detected in front of the controlled vehicle, the method includes the following steps:
- (v, 18) calculation of the minimum sufficient deceleration (D_{sf}) required as setting for the vehicle to ensure it stops behind the target detected;
- (w, 19) activation of the assisted braking mode by comparison of the said minimum sufficient deceleration (D_{sf}) with a specified threshold (D₀) ;
- (x, 20) stopping of the emergency braking mode if the sufficient deceleration (D_{sf}) is higher than the threshold (D₀) ;
- (h, 8) activation of the vehicle deceleration at the actual required value (D_{sf}), by management of the brake system;
- (i, 9) verification of the driver's braking and the presence of an obstacle in front of the vehicle;
- (j, 10) stopping of the assisted braking mode and cancellation of the deceleration setting if the driver is no longer braking or if no obstacle is detected in front of the vehicle.

7. Assisted braking method according to one of Claims 5 or 6, **characterized in that**, at the selected stopping of the assisted braking mode (step j, 10), the deceleration setting is progressively cancelled according to the time, the danger detected and the speed of the vehicle.

8. Assisted braking method according to one of Claims 5, 6 or 7, **characterized in that**, after the stopping of the assisted braking mode which was started after deactivation of the automatic distance control system by the driver's braking, the said automatic system is reactivated by the driver's deliberate action (step k).

9. Assisted braking method according to one of Claims 5, 6 or 7, **characterized in that**, after the stopping of the assisted braking mode which was started after suspension of the automatic distance control system by the driver's braking:
- if the conditions for distance control by the SARD system, involving the speed of the vehicle, its maximum deceleration, how well the traffic is flowing and the driving style in particular, are met, the said SARD system is automatically reactivated (step 25);
- if the said control conditions are not met, the SARD system is deactivated (step 26) and can be reactivated by the driver's deliberate action (step 28).

10. Assisted braking method according to Claim 5, **characterized in that** the activation of the assisted braking mode is triggered provided that the calculated minimum sufficient deceleration (D_{sf}) is also higher than a first specified deceleration threshold (D₀) and that it is higher than the deceleration (D_{c}) activated by the driver.

11. Assisted braking method according to Claim 5, **characterized in that** the activation of the assisted braking mode is triggered provided that the calculated minimum sufficient deceleration (D_{sf}) is higher than the deceleration (D_{c}) activated by the driver, which must itself be higher than a second deceleration threshold (D₁) determined according to the comfortable braking limit, the speed of the controlled vehicle and the style of driving of its driver as well as road surface grip conditions.

12. Assisted braking method according to Claim 3, **characterized in that** the time period, during which the programmed hold mode of the assisted braking is run, is variable according to the danger detected, and the actual speed and deceleration of the vehicle.

13. Assisted braking method according to one of the preceding claims, **characterized in that** the change in the vehicle deceleration gradient is calculated according to the average value and the maximum value of the deceleration on the one hand and the last value of the deceleration measured before the activation of the assisted braking on the other hand.

14. Assisted braking method according to one of Claims 6, 10 or 11, **characterized in that** the minimum threshold (D₀) of the vehicle deceleration is variable according to the driver's driving style analysed on the basis of previous triggerings of the assisted braking mode.

## Patentansprüche

1. Bremsassistenzverfahren für ein Kraftfahrzeug, das mit einem automatischen Abstands- und Geschwindigkeitsregelungssystem ausgerüstet ist und Mittel zum Erfassen von Zielen sowie einen Rechner zum Steuern des Bremssystems enthält, **dadurch gekennzeichnet, dass** es dann, wenn das automatische Regelungssystem durch Betätigung des Bremssystems von Seiten des Fahrers deaktiviert oder angehalten wird, eine Phase des unterstützten Bremsens aufweist, in deren Verlauf die Verzögerung des Fahrzeugs durch den Rechner entsprechend einem Sollwert gesteuert wird, der in Echtzeit als Funktion des relativen Abstandes und der relativen Geschwindigkeit des erfassten Zielfahrzeugs bestimmt wird, wobei diese Phase aufrechterhalten wird, solange der Fahrer bremst und vor dem Fahrzeug ein Hindernis erfasst worden ist.

2. Bremsassistenzverfahren nach Anspruch 1, **dadurch gekennzeichnet, dass** in der Betriebsphase des unterstützten Bremsens dann, wenn der Fahrer seinen beabsichtigten Bremsvorgang durch Tritt auf das Bremspedal aufrechterhält und die Hinderniserfassungsmittel Informationen liefern, die das Fehlen des Ziels vor dem geregelten Fahrzeug angeben, diese Betriebsart des unterstützten Bremsens beendet wird.

3. Bremsassistenzverfahren nach Anspruch 1, **dadurch gekennzeichnet, dass** in der Betriebsphase des unterstützten Bremsens dann, wenn einerseits der Fahrer den Bremsvorgang beendet und nicht beschleunigt und wenn andererseits eine Gefahrensituation erfasst wird, der Rechner des Bremssteuersystems eine programmierte Betriebsart des Beibehaltens des unterstützten Bremsens während einer vorgegebenen Zeit festlegt, wobei die programmierte Betriebsart zum Beibehalten des unterstützten Bremsens beendet wird und der Verzögerungssollwert des Fahrzeugs auf Null gesetzt wird, wenn die Zeit abgelaufen ist oder wenn der Fahrer beschleunigt.

4. Bremsassistenzverfahren nach Anspruch 1, **dadurch gekennzeichnet, dass** in der Betriebsphase des unterstützten Bremsens dann, wenn der Fahrer den Bremsvorgang beendet und das Fehlen einer Gefahr festgestellt wird, die Betriebsart des unterstützten Bremsens beendet wird.

5. Bremsassistenzverfahren nach einem der vorhergehenden Ansprüche, **dadurch gekennzeichnet, dass** es in dem Fall, in dem eine automatische Abstandsregelung bezüglich eines erfassten Zielfahrzeugs durch beabsichtigtes Bremsen des Fahrers deaktiviert oder angehalten wird, die folgenden Schritte enthält:
- (f, 6) Berechnen der aufzubringenden ausreichenden minimalen Verzögerung (D_{sf}) als Sollwert für das Fahrzeug, um sein Anhalten hinter dem erfassten Ziel sicherzustellen;
- (g, 7) Aktivieren der Betriebsart des unterstützten Bremsens, sofern die berechnete ausreichende minimale Verzögerung (D_{sf}) größer als die vom Fahrer gesteuerte Verzögerung (D_{c}) ist;
- (h, 8) Steuern der Verzögerung des Fahrzeugs auf den momentanen Sollwert (D_{sf}) durch Steuern des Bremssystems;
- (i, 9) Verifizieren des Bremsens des Fahrers und des Vorhandenseins eines Hindernisses vor dem Fahrzeug;
- (j, 10) Beenden der Betriebsart des unterstützten Bremsens und Setzen des Verzögerungssollwerts auf Null, wenn der Fahrer nicht mehr bremst oder wenn sich vor dem Fahrzeug kein erfasstes Hindernis befindet.

6. Bremsassistenzverfahren nach einem der Ansprüche 1 bis 4, **dadurch gekennzeichnet, dass** es in dem Fall, in dem eine automatische Geschwindigkeitsregelung durch beabsichtigtes Bremsen durch den Fahrer deaktiviert oder angehalten wird und eine Notbremsbetriebsart ausgelöst wird, in deren Verlauf vor dem geregelten Fahrzeug ein Hindernis erfasst wird, die folgenden Schritte enthält:
- (v, 18) Berechnen der aufzubringenden ausreichenden minimalen Verzögerung (D_{sf}) als Sollwert für das Fahrzeug, um sein Anhalten hinter dem erfassten Ziel zu gewährleisten;
- (w, 19) Aktivieren der Betriebsart des unterstützten Bremsens durch Vergleichen der ausreichenden minimalen Verzögerung (D_{sf}) mit einem bestimmten Schwellenwert (Dₒ);
- (x, 20) Beenden der Notbremsbetriebsart, falls die ausreichende Verzögerung (D_{sf}) größer als der Schwellenwert (Dₒ) ist;
- (h, 8) Steuern der Verzögerung des Fahrzeugs auf den momentanen Sollwert (D_{sf}) durch Steuern des Bremssystems;
- (i, 9) Verifizieren des Bremsens durch den Fahrer und des Vorhandenseins eines Hindernisses vor dem Fahrzeug;
- (j, 10) Beenden der Betriebsart des unterstützten Bremsens und Setzen des Verzögerungssollwerts auf Null, falls der Fahrer nicht mehr bremst oder falls vor dem Fahrzeug kein Hindernis mehr erfasst wird.

7. Bremsassistenzverfahren nach einem der Ansprüche 5 oder 6, **dadurch gekennzeichnet, dass** beim festgelegten Beenden der Betriebsart des unterstützten Bremsens (Schritt j, 10) der Verzögerungssollwert in Abhängigkeit von der Zeit, der erfassten Gefahr und der Geschwindigkeit des Fahrzeugs progressiv auf Null gesetzt wird.

8. Bremsassistenzverfahren nach einem der Ansprüche 5, 6 oder 7, **dadurch gekennzeichnet, dass** nach dem Beenden der Betriebsart des unterstützten Bremsens, die nach der Deaktivierung des automatischen Abstandsregelungssystems durch Bremsen des Fahrers gestartet worden war, das automatische System durch beabsichtigten Eingriff des Fahrers wieder aktiviert wird (Schritt k).

9. Bremsassistenzverfahren nach einem der Ansprüche 5, 6 oder 7, **dadurch gekennzeichnet, dass** nach dem Beenden der Betriebsart des unterstützten Bremsens, die nach Beendigung des automatischen Abstandsregelungssystems durch Bremsen des Fahrers gestartet worden war:
- falls die Bedingungen der Abstandsregelung durch das System SARD, die die Geschwindigkeit des Fahrzeugs, seine maximale Verzögerung, die Flüssigkeit des Verkehrs und den Fahrstil betreffen, erfüllt sind, das System SARD automatisch wieder aktiviert wird (Schritt 25);
- falls die Regelungsbedingungen nicht erfüllt sind, das System SARD deaktiviert wird (Schritt 26) und durch beabsichtigte Einwirkung des Fahrers wieder aktiviert werden kann (Schritt 28).

10. Bremsassistenzverfahren nach Anspruch 5, **dadurch gekennzeichnet, dass** die Aktivierung der Betriebsart des unterstützten Bremsens ausgelöst wird, sofern die berechnete ausreichende minimale Verzögerung (D_{sf}) viel größer als ein erster Schwellenwert (Dₒ) der bestimmten Verzögerung ist oder größer als die von dem Fahrer befohlene Verzögerung (D_{c}) ist.

11. Bremsassistenzverfahren nach Anspruch 5, **dadurch gekennzeichnet, dass** die Aktivierung der Betriebsart des unterstützten Bremsens ausgelöst wird, sofern die berechnete ausreichende minimale Verzögerung (D_{sf}) größer als die von dem Fahrer befohlene Verzögerung (D_{c}) ist, die ihrerseits größer als ein zweiter Verzögerungsschwellenwert (D₁) sein muss, der als Funktion der Grenze eines komfortablen Bremsens, der Geschwindigkeit des geregelten Fahrzeugs und des Fahrstils seines Fahrers sowie der Fahrbahnhaftungsbedingungen bestimmt.

12. Bremsassistenzverfahren nach Anspruch 3, **dadurch gekennzeichnet, dass** die Zeit, in der die programmierte Betriebsart des Beibehaltens des unterstützten Bremsens in Abhängigkeit von der erfassten Gefahr, der momentanen Geschwindigkeit und der momentanen Verzögerung des Fahrzeugs veränderlich ist.

13. Bremsassistenzverfahren nach einem der vorhergehenden Ansprüche, **dadurch gekennzeichnet, dass** die Entwicklung des Verzögerungsgradienten des Fahrzeugs als Funktion einerseits des Mittelwerts und des Maximalwerts der Verzögerung und andererseits des letzten Verzögerungswerts, der vor der Aktivierung des unterstützten Bremsens gemessen wurde, berechnet wird.

14. Bremsassistenzverfahren nach einem der Ansprüche 6, 10 oder 11, **dadurch gekennzeichnet, dass** der minimale Schwellenwert (Dₒ) der Verzögerung des Fahrzeugs in Abhängigkeit vom Fahrstil des Fahrers, der anhand der vorhergehenden Auslösungen der Betriebsart des unterstützten Bremsens analysiert wird, veränderlich ist.
